# DEMANDE DE BREVET EUROPEEN

(11) **EP 0 729 706 A2**
(43) Date de publication de la demande: **04.09.1996**
(21) Numéro de dépôt: 96440021.2
(22) Date de dépôt: 28.02.1996
(51) Int. Cl.: A23G 7/00, B65G 49/08, B65G 47/51, A23G 3/30

(54) **Procédé et installation d'amenée et de retour de plateau d'un installation agro-alimentaire**

(30) Priorité: 02.03.1995 FR 9502607
(71) Demandeur: Société TOGUM, F-67116 Reichstett (FR)
(72) Inventeur: Towae, Gérard, 67000 Strasbourg (FR)
(74) Mandataire: Metz, Paul

(57) **Abrégé**

L'invention se rapporte à un procédé et à une installation d'amenée et de retour en boucle fermée de plateaux de maturation (8) vides ou chargés de feuilles de pâte à mâcher (13) entre une unité de production de pâte à mâcher (14) et une unité de maturation desdites feuilles de pâte à mâcher reliées entre elles par un moyen de transport (5) tel qu'une succession ininterrompue de chariots de transport (6) attelés les uns aux autres. Les plateaux (8) vides revenant de l'unité de maturation sont réintroduits dans l'unité de production (14) à l'aide d'un bras manipulateur (26) tandis que les plateaux (8) chargés de feuilles de pâte à mâcher (13) provenant de l'unité de production (14) sont substitués aux plateaux (8) vides sur les chariots de transport (6).

Cette invention intéresse les fabricants de lignes de production de produits alimentaires.

## Description

La présente invention se rapporte à un procédé et à une installation d'amenée et de retour d'une charge, par exemple dans le circuit d'une unité de production alimentaire.

On connaît dans différents secteurs des industries agro-alimentaires, et notamment celui de la production de pâte à mâcher, la nécessité de charger les feuilles de pâte dans des plateaux de maturation.

Ces plateaux sont évacués vers les chambres de maturation pour approvisionner les groupes de conditionnement, emballeurs et autres et reviennent vides en boucle fermée vers l'unité de chargement des plateaux en feuilles superposées.

Cette circulation des plateaux s'effectue principalement encore manuellement en raison de la conformation des plateaux et de la difficulté de mettre en oeuvre une circulation automatique conforme à la demande.

La présente invention a pour but de procurer une installation permettant de concilier flexibilité et rendement.

A cet effet, l'invention se rapporte à une installation d'amenée et de retour des plateaux de maturation en boucle fermée entre un poste de transfert amont situé en sortie d'une ligne de production de feuilles ou plaques de pâte à mâcher et un poste de transfert aval vers une unité de maturation des feuilles de pâte à mâcher.

Les plateaux de maturation chargés de feuilles de pâte à mâcher superposées sont pris en charge en sortie de la ligne de production, déposés, par exemple sur des chariots, puis transportés vers l'unité de maturation où ils sont déchargés. Dans le même temps, des plateaux vides sont déposés sur les chariots en remplacement des plateaux chargés et ramenés vers le poste de transfert amont où ils sont à nouveaux introduits dans le cycle de production.

L'avantage principal de l'invention réside dans la gestion en continu et entièrement automatisée des flux de plateaux de maturation chargés d'une part et vides d'autre part entre les postes de transfert amont et aval.

Selon un autre de ses avantages, l'invention permet d'adapter en permanence les cadences de production de feuilles de pâte à mâcher et de mise à disposition et de transfert des plateaux de maturation entre les unités de production et de maturation, permettant une grande souplesse d'exploitation et une augmentation sensible de la productivité.

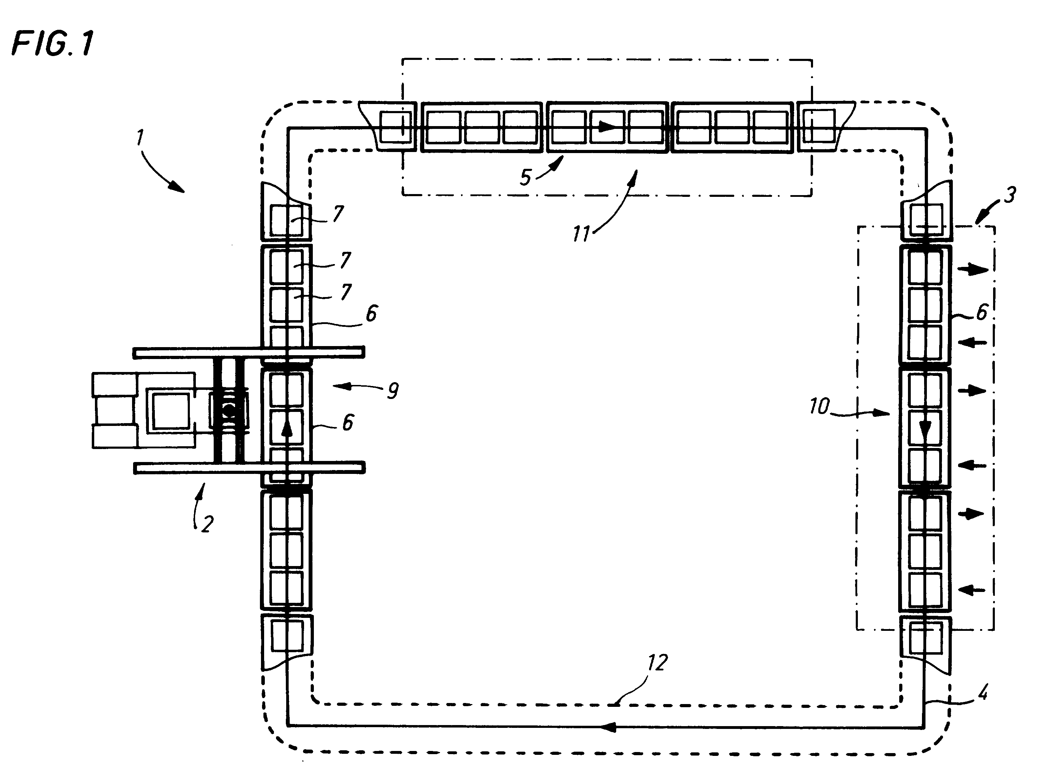

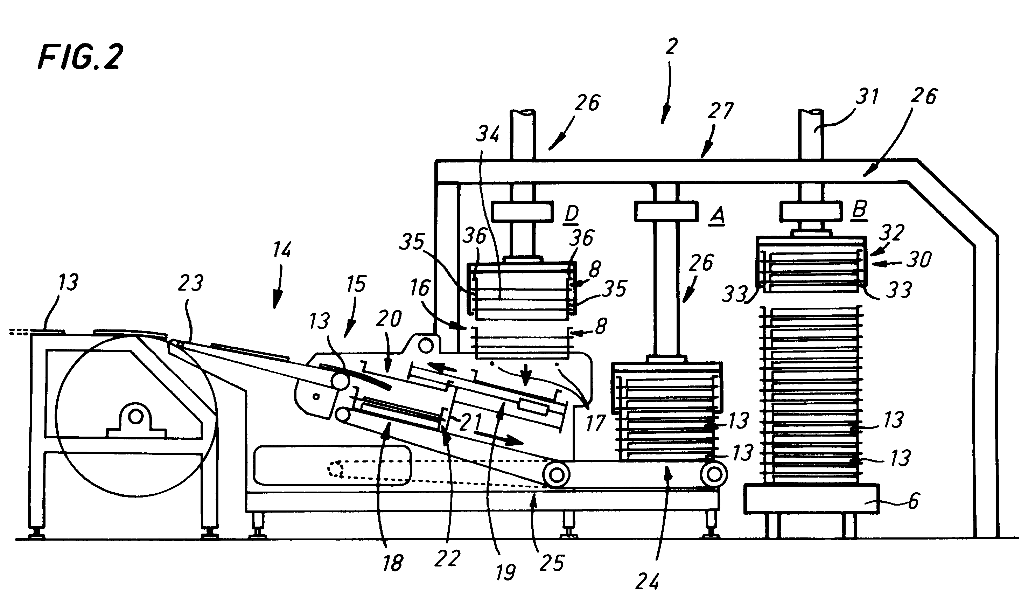

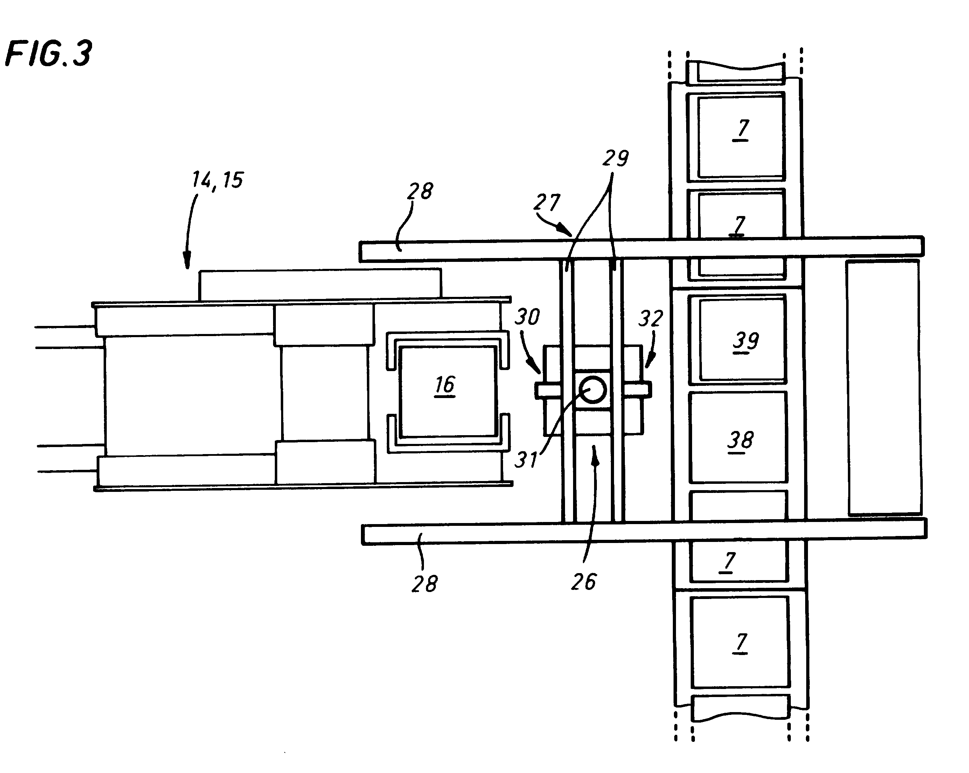

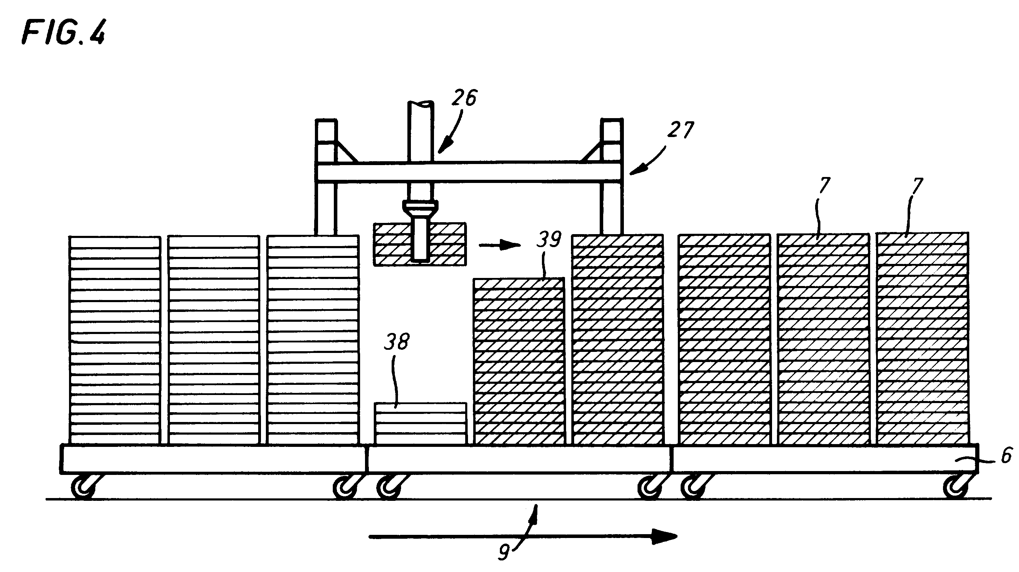

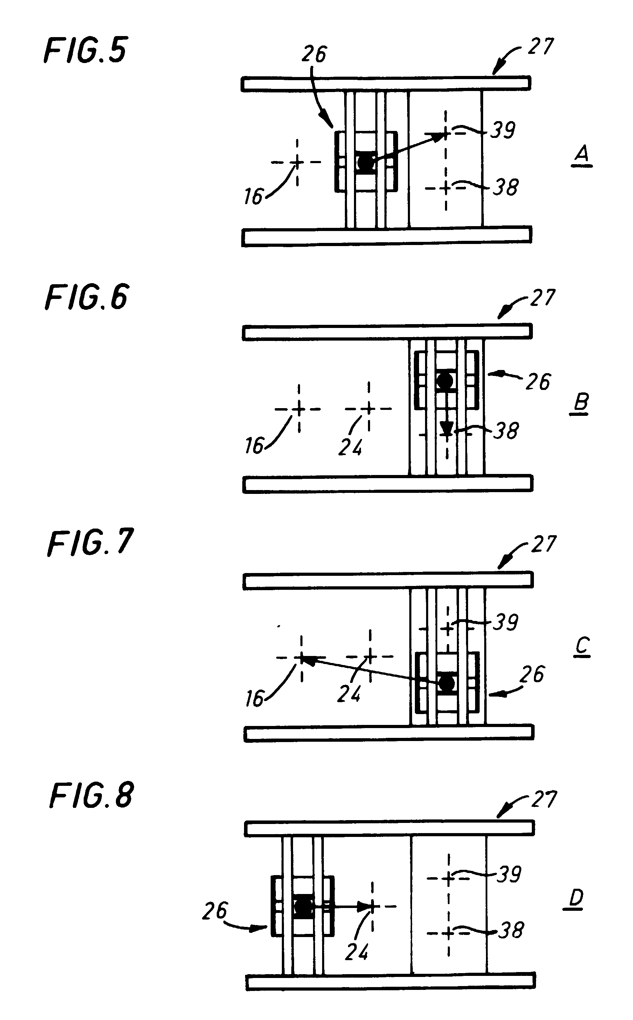

D'autres caractéristiques et avantages ressortiront mieux de la description qui va suivre d'une forme particulière et non-limitative de réalisation de l'installation d'amenée et de retour selon l'invention en référence au dessin accompagnant sur lequel :
. la figure 1 est une vue schématique en plan de l'installation complète selon l'invention ;
. la figure 2 est une vue en élévation du poste de transfert amont disposé en sortie d'une ligne de production de feuilles de pâte à mâcher sur laquelle on représente les différentes positions pouvant être prises par le bras manipulateur ;
. la figure 3 est une vue en plan du poste de transfert amont représenté sur la figure 2 ;
. la figure 4 est une vue de profil du poste de transfert amont représenté sur la figure 2 avec trois chariots de transport de plateaux de maturation à quai devant le poste, la flèche représentant le sens de progression ;
. les figures 5 et 6 sont des vues schématiques en plan du portique de transfert amont et de son bras manipulateur de chargement-déchargement, sur lesquelles on représente la cinématique de déplacement du bras manipulateur pour des plateaux de maturation chargés ;
. les figures 7 et 8 sont analogues aux figures 5 et 6 et représentent la cinématique de déplacement du bras manipulateur pour des plateaux de maturation vides.

L'invention procède de l'idée générale inventive consistant à établir une circulation permanente de plateaux de maturation entre deux postes de transfert amont et aval par permutation symétrique et alternée de plateaux de maturation chargés et de plateaux de maturation vides acheminés d'un poste à l'autre à l'aide d'un moyen de transport de charge tel qu'une pluralité de chariots ou bien encore une bande convoyeuse sans fin.

Cette disposition particulièrement avantageuse de l'invention permet d'établir un flux continu de plateaux de maturation à vitesse continûment ajustable en fonction des impératifs de production entre deux unités fonctionnelles de traitement telles que, par exemple, une unité de production et une unité de stockage intermédiaire.

L'installation complète d'amenée et de retour d'une charge selon l'invention représentée schématiquement sur la figure 1 et désignée dans son ensemble par la référence générale 1 comprend successivement un poste de transfert amont 2 et un poste de transfert aval 3 reliés entre eux selon un circuit ou chemin de circulation en boucle fermée 4 par un moyen de transport de charge 5, préférentiellement mais non limitativement des chariots tels que 6 portant chacun, par exemple, trois empilements tels que 7 de plateaux de maturation tels que 8.

Pour des raisons de clarté et de simplicité, le chemin de circulation 4 des chariots 6 est représenté sur la figure 1 par une simple boucle périmétrique carrée fermée sur elle-même et portant des flèches indiquant le sens d'avance général des chariots 6 le long de ce circuit 4. Il est clair que cette représentation du trajet des chariots 6 entre les postes de transfert amont 2 et aval 3 est donnée à titre d'exemple non-limitatif uniquement et que la forme du chemin de circulation 4 sera adapté aux besoins et aux contraintes imposées par l'environnement.

Par ailleurs, et toujours pour des raisons de clarté et de simplicité, on ne représente sur la figure 1 que trois groupes séparés 9, 10 et 11 de chariots 6 formés chacun d'une succession de trois chariots 6 attelés les uns aux autres, un premier groupe 9 de trois chariots 6 étant à quai devant le poste de transfert amont 2, un second groupe 10 étant à quai devant le poste de transfert aval 3 et un dernier groupe 11 de chariots 6 occupant une position intermédiaire entre les deux postes de transfert 2 et 3. On comprendra néanmoins que, selon une disposition particulièrement avantageuse de l'invention, le chemin de circulation 4 sera occupé en permanence par un convoi formé d'une succession ininterrompue de chariots 6 attelés les uns aux autres. Ce convoi de chariots 6 dont l'emprise 12 au sol est représentée schématiquement en pointillés sur la figure 1 permet d'assurer à l'installation 1 selon l'invention un fonctionnement continu en régime permanent comme il sera décrit en détail ultérieurement.

Enfin, le poste de transfert aval 3 est représenté par un simple bloc fonctionnel sur la figure 1, les mouvements de chargement et de déchargement des empilements 7 de plateaux de maturation 8 étant matérialisés par une pluralité de flèches en sens opposés transversales au groupe 11 de trois chariots 6. Le poste de transfert aval 3 disposé à l'entrée, par exemple d'un groupe de maturation des feuilles ou plaques de pâte à mâcher telles que 13, pourra être d'un type analogue au poste de transfert amont 2 selon l'invention dont la description va suivre, ou de tout autre type, par exemple à éléments pousseurs pour le chargement et le déchargement des empilements 7 de plateaux de maturation 8 des chariots 6.

Comme représenté sur la figure 2, le poste de transfert amont 2 selon l'invention est disposé en sortie d'une ligne de production de pâte à mâcher désignée dans son ensemble par la référence générale 14 et comprenant avantageusement une installation de chargement-évacuation automatique à haute cadence 15 des plateaux de maturation 8. Cette installation de chargement-évacuation automatique 15 décrite par ailleurs dans une demande de brevet FR-94/11149 non encore publiée au nom de la demanderesse se compose de façon générale des unités suivantes.

Des plateaux de maturation 8 vides sont placés les uns sur les autres selon un empilement de réserve 16 reposant par le dernier plateau inférieur sur deux doigts de retenue tels que 17. Les plateaux de maturation 8 vides quittent individuellement l'empilement de réserve 17 par le bas puis sont transférés un par un jusqu'à un descendeur 18 à l'aide d'un transbordeur-basculeur 19. Le descendeur 18 permet de descendre les plateaux 8 par sauts successifs entre trois niveaux étagés représentés par une position supérieure à l'état vide 20, une position intermédiaire de remplissage 21 et une position basse d'évacuation 22.

Une rampe transporteuse d'amenée 23 projette à plat les feuilles de pâte à mâcher individualisées 13 sur les plateaux de maturation 8 vides en position de remplissage 21. Une fois le chargement d'un plateau 8 complété, celui-ci passe en position basse d'évacuation 22 et est transféré vers un empilement de réserve 24 de plateaux de maturation 8 chargés par un convoyeur d'évacuation 25.

Le dispositif de transfert 2 selon l'invention est adapté pour coopérer avec l'installation de chargement-évacuation 15 décrite ci-dessus. Il est cependant évident que moyennant un nombre limité de modifications à la portée de l'homme du métier, le dispositif de transfert 2 selon l'invention pourra être adapté sans difficulté à tout type d'unité fonctionnelle de production, de maturation, de mise en forme, de conditionnement, d'emballage-ensachage ou autre, dans le domaine agro-alimentaire en particulier et plus généralement dans tout domaine où existe la nécessité d'établir une circulation d'amenée et de retour en boucle fermée entre deux postes de traitement successifs d'articles individuels, par exemple les plateaux de maturation 8 décrits ci-dessus et circulant à l'état chargé entre le dispositif de transfert amont 2 et le dispositif de transfert aval 3 et à l'état vide au retour.

Comme il ressort plus particulièrement des figures 2 et 3, le dispositif de transfert 2 selon l'invention comporte principalement un bras manipulateur 26 à au-moins deux degrés de liberté soutenu par un portique 27 généralement parallélépipédique. Selon une caractéristique essentielle de l'invention, le bras manipulateur 26 est monté déplaçable, par exemple coulissant longitudinalement au portique 27 sur deux rails de guidage parallèles tels que 28 au moyen de deux barres d'accouplement également parallèles telles que 29 transversales au portique 27. Le bras manipulateur 26 est également agencé de façon à pouvoir, par exemple, coulisser entre les barres d'accouplement 29, parallèlement à celles-ci. Finalement, le bras manipulateur 26 peut se déplacer selon deux directions perpendiculaires dans le plan des rails de guidage 28 du portique 27, respectivement longitudinalement et transversalement à ces deux rails 28, selon une cinématique de déplacement préférée qui sera décrite en détail ultérieurement.

Le bras manipulateur 26 se compose d'une tête de préhension 30 dont les déplacements verticaux entre une position basse en complément ou en soustraction d'un empilement de plateaux de maturation 8 et une position haute de transfert de ces mêmes plateaux 8 sont commandés, par exemple par un vérin hydraulique ou pneumatique 31. La tête de préhension 30 comprend un cadre porteur en forme de U inversé 32 prolongé par deux retours d'extrémité inférieurs tels que 33 dirigés vers l'intérieur de la surface du cadre porteur 32 en U et coopérant avec les plateaux de maturation 8 comme il va maintenant être décrit.

Les plateaux de maturation 8 sont constitués classiquement de la façon suivante. Un fond 34 supporte deux traverses de bordure telles que 35 à rebords d'extrémité supérieurs tels que 36 dirigés vers l'extérieur de l'espace intérieur de réception des feuilles de pâte à mâcher 13 des plateaux 8 par lesquels un plateau 8 repose sur les retours d'extrémité inférieurs 33 du cadre porteur 32. Le fond 34 des plateaux 8 est complété par deux bordures latérales libres, c'est-à-dire sans rebord d'extrémité.

Selon une disposition particulière de l'invention, la tête de préhension 30 du bras manipulateur 26 est agencée de façon à pouvoir recevoir les plateaux de maturation 8 par groupe ou lot de quatre plateaux 8 superposés. Bien entendu, le nombre de plateaux 8 transportables simultanément par la tête de préhension 30 pourra être adapté en fonction des besoins, par exemple par réglage de la hauteur des bras verticaux tels que 37 du cadre porteur 32.

Selon une disposition essentielle de l'invention, la combinaison judicieuse des déplacements verticaux alternatifs vers le haut ou vers le bas de la tête de préhension 30 du bras manipulateur 26 et du déplacement latéral du bras manipulateur 26 dans son ensemble permet d'établir une circulation continue entièrement automatisée en boucle fermée des plateaux de maturation 8 entre les postes de transfert amont 2 et aval 3. Les plateaux 8 vides revenant de la chambre de maturation sont réintroduits dans le circuit et rechargés de feuilles de pâte à mâcher 13, puis déposés aux emplacements libérés par les plateaux 8 vides sur les chariots de transport 6 avant d'être à nouveau acheminés vers l'unité de transfert aval 3.

On représente sur la figure 4 le groupe 9 de trois chariots 6 à quai devant le poste de transfert 2, en régime de fonctionnement permanent de l'installation 1 selon l'invention. Pour plus de clarté, les plateaux de maturation 8 sont représentés de façon schématique sous la forme de simples cadres rectangulaires, ceux correspondant à des plateaux 8 chargés de feuilles de pâte à mâcher 13 portant des hachures.

Chacun des trois chariots 6 du groupe 9 représenté sur la figure 2 présente un état de chargement différent. Le chargement d'un premier chariot 6 d'extrémité est achevé, celui-ci portant trois empilements 7 complets de plateaux de maturation 8 chargés de feuilles de pâte à mâcher 13. Le chargement du second chariot 6 d'extrémité n'a pas encore débuté, celui-ci portant toujours son chargement complet de plateaux 8 vides. Le chariot 6 en position centrale est en cours de chargement et présente un empilement 7 complet de plateaux 8 chargés et deux empilements successifs 38 et 39 amputés respectivement de plateaux 8 chargés et de plateaux 8 vides. Par empilement complet on comprendra, par exemple, un empilement comportant cinq groupes de quatre plateaux 8 chacun, soit vingt plateaux au total.

Une forme préférée mais non-limitative de circulation du bras manipulateur 26 entre les différents postes de chargement et de déchargement des plateaux de maturation 8 peut être réalisée de la façon suivante.

La tête de préhension 30 du bras manipulateur 26 est amenée en élévation à la verticale de l'empilement de réserve 24 en plateaux de maturation 8 chargés de feuilles de pâte à mâcher 13 du poste de transfert 2, puis abaissée en position de soustraction d'un groupe de quatre plateaux 8. Cette première position de la tête de préhension 30 est représentée sur la figure 2 et désignée par la référence alphabétique générale A. La tête de préhension 30 s'engage par le haut sur l'empilement de réserve 24 par ouverture temporaire du cadre porteur 32 à sa base, par exemple par écartement vers l'extérieur de la surface du cadre 32 de ses bras verticaux 37. Par ailleurs, la descente du vérin de commande 31 est réglée de façon à s'interrompre lorsque le nombre voulu de plateaux 8, ici quatre, est engagé dans l'espace intérieur du cadre porteur 32. Le cadre porteur 32 est alors verrouillé en position de transport des plateaux 8, ses retours d'extrémité inférieurs 33 venant en prise sous les rebords 36 du dernier plateau inférieur de l'empilement. La tête de préhension 30 est ensuite rappelée en position haute de transport des plateaux 8 puis le bras manipulateur 26 dans son ensemble se déplace par mouvements de coulissement successifs ou simultanés longitudinalement et transversalement au portique 27 jusqu'à la verticale de l'empilement 38 de plateaux 8 chargés de feuilles de pâte à mâcher 13 porté par le chariot 6 central.

La tête de préhension 30 est ensuite abaissée en position basse de complément de l'empilement 38, le groupe de quatre plateaux de maturation 8 provenant du poste de transfert 2 étant alors déposé au sommet de l'empilement 38 par ouverture du cadre porteur 32 à sa base. Cette position est représentée sur la figure 2 et désignée par la référence alphabétique générale B.

Après rappel vers le haut de la tête de préhension 30, celle-ci est déplacée à la verticale de l'empilement 39 du chariot 6 central et le groupe de quatre plateaux 8 vides est engagé dans l'espace intérieur du cadre porteur 32. Cette position en soustraction de quatre plateaux de maturation 8 vides de l'empilement 39 du chariot 6 est représentée sur la figure 7 et désignée par la référence alphabétique générale C. Finalement, le groupe de quatre plateaux 8 vides est transporté du chariot 6 vers le poste de transfert 2 et déposé en complément au sommet de l'empilement de réserve 16 en plateaux de maturation 8 vides du poste de transfert 2. Cette dernière position est représentée sur la figure 2 et désignée par la référence alphabétique générale D.

Après approvisionnement de l'empilement de réserve 16 en plateaux de maturation 8 vides, la tête de préhension 30 est ramenée en position de soustraction A de quatre plateaux de maturation 8 chargés de feuilles de pâte à mâcher 13 de l'empilement de réserve 24 du poste de transfert 2 et un nouveau cycle de transfert des plateaux de maturation 8 peut débuter.

La circulation du bras manipulateur 26 entre les différents postes de chargement-déchargement de plateaux 8 est représentée schématiquement sur les figures 5 à 8.

Comme représenté sur la figure 5, le bras manipulateur 26 est en position A, c'est-à-dire en position de soustraction de quatre plateaux 8 chargés de feuilles de pâte à mâcher 13 de l'empilement de réserve 24 du poste de transfert 2. Le bras manipulateur 26 est ensuite amené en position de complément B de l'empilement 38 de plateaux de maturation 8 chargés de feuilles de pâte à mâcher 13 sur le chariot 6 central (figure 6). Après déchargement des quatre plateaux 8 déposés en complément au sommet de l'empilement 38, le bras manipulateur 26 est amené en position basse de soustraction C de quatre plateaux 8 vides de l'empilement 39 sur le chariot 6 (figure 7). Le bras manipulateur 26 transporte ensuite ce groupe de quatre plateaux 8 vides depuis le chariot 6 vers la position basse en complément D de l'empilement de réserve 16 en plateaux 8 vides du poste de transfert 2 (figure 8). Enfin, le bras manipulateur 26 revient dans sa position initiale A en soustraction de quatre plateaux de maturation 8 chargés de feuilles de pâte à mâcher 13 de l'empilement de réserve 24 du poste de transfert 2, prêt pour un nouveau cycle de fonctionnement.

Selon une caractéristique particulièrement avantageuse de l'invention ressortant clairement des figures 5 à 8, les empilements de réserve 16 et 24 du poste de transfert 2 sont alignés selon une direction longitudinale aux rails de guidage 28 du portique 27, ce qui permet de limiter les déplacements du bras manipulateur 26 et donc de réduire le temps nécessaire à celui-ci pour passer d'un empilement à l'autre.

D'autres variantes d'exécution simples du dispositif de mise en oeuvre du procédé peuvent être réalisées sans sortir des limites de la présente invention. En particulier, le bras manipulateur 26 pourra être agencé de façon à pouvoir se déplacer longitudinalement et transversalement au portique 27 par mouvements de roulement simples ou bien encore par combinaison de mouvements de roulement et de mouvements de coulissement.

## Revendications

1. Procédé d'amenée et de retour d'une charge, par exemple des plateaux de maturation (8) de feuilles ou plaques de pâte à mâcher (13), dans le circuit d'une installation de production de pâte à mâcher, entre au moins un poste de transfert amont (2) et un poste de transfert aval (3), le premier poste (2) étant associé à une unité de production de pâte à mâcher (14) sous la forme de feuilles (13) et le second poste (3) étant associé à une unité de maturation desdites feuilles de pâte à mâcher (13), les postes de transfert (2,3) étant reliés entre eux par un moyen de transport (5) des plateaux de maturation (8) du poste de transfert amont (2) vers le poste de transfert aval (3) et inversement et comportant chacun un moyen de manipulation desdits plateaux (8), caractérisé en ce que l'on établit à l'aide d'un moyen de manipulation des plateaux (8) une circulation en boucle fermée continue et entièrement automatique des plateaux de maturation (8) entre les postes de transfert amont (2) et aval (3) par permutation symétrique et alternée des plateaux de maturation (8) vides revenant de l'unité de maturation des feuilles de pâte à mâcher (13) avec les plateaux (8) chargés de feuilles de pâte à mâcher (13) sortant de l'unité de production (14) et devant être acheminés vers le poste de transfert aval (3).

2. Procédé d'amenée et de retour d'une charge selon la revendication 1, caractérisé en ce que au moins le moyen de manipulation des plateaux de maturation (8) du poste de transfert amont (2) est agencé de façon à pouvoir se déplacer entre au moins deux positions, respectivement de chargement et de déchargement des plateaux de maturation (8) associées à l'unité de production (14) et au moins deux positions, respectivement de chargement et de déchargement des plateaux (8) associées au moyen de transport (5) desdits plateaux (8).

3. Procédé d'amenée et de retour d'une charge selon la revendication 2, caractérisé en ce que le moyen de manipulation des plateaux de maturation (8) du poste de transfert amont (2) est agencé de façon à pouvoir se déplacer successivement d'une première position (A) de chargement des plateaux de maturation (8) chargés de feuilles de pâte à mâcher (13) associée à l'unité de production de pâte à mâcher (14) vers une seconde position (B) de déchargement de ces plateaux (8) chargés sur le moyen de transport (5), puis vers une troisième position (C) de chargement en plateaux de maturation (8) vides sur ledit moyen de transport (5) et enfin vers une quatrième position (D) de déchargement de ces plateaux (8) associée à l'unité de production de pâte à mâcher (14), après quoi le moyen de manipulation revient à la première position (A) de chargement en plateaux de maturation (8) chargés de l'unité de production (14), prêt à un nouveau cycle de transfert des plateaux (8) entre l'unité de production (14) et le moyen de transport (5).

4. Procédé d'amenée et de retour d'une charge selon l'une quelconque des revendications 1 à 3, caractérisé en ce que le moyen de manipulation des plateaux de maturation (8) est agencé de façon à pouvoir se déplacer entre les différentes positions (A, B, C et D) de chargement et de déchargement des plateaux (8) par une combinaison de déplacements rectilignes successifs ou simultanés selon deux directions orthogonales.

5. Installation d'amenée et de retour pour la mise en oeuvre du procédé selon l'une quelconque des revendications 1 à 4 de plateaux de maturation (8) vides ou chargés de feuilles ou plaques de pâte à mâcher (13) entre au moins deux postes de transfert amont (2) et aval (3) d'une unité de production de pâte à mâcher (14), caractérisée en ce que les postes de transfert amont (2) et aval (3) sont reliés entre eux par un chemin de circulation en boucle fermée (4) d'un moyen de transport (5) des plateaux de maturation (8), l'unité de transfert amont (2) se composant d'un bras manipulateur (26) à au moins deux degrés de liberté agencé de façon à pouvoir se déplacer sur un portique (27) entre au moins deux positions (A, D), respectivement de chargement et de déchargement des plateaux de maturation (8) associées à l'unité de production (14) et au moins deux positions (B, C), respectivement de chargement et de déchargement des plateaux (8) associées au moyen de transport (5) desdits plateaux (8), le bras manipulateur (26) comportant une tête de préhension (30) généralement manoeuvrable entre une position basse en complément ou en soustraction d'un ou de plusieurs plateau(x) de maturation (8) et une position haute de transfert de ce ou de ces plateau(x) (8) entre deux positions de chargement et de déchargement successives associées à l'unité de production (14) et/ou au moyen de transport (5) des plateaux (8), l'unité de transfert aval (3) pouvant être de même conformation que l'unité de transfert amont (2) ou différente, par exemple comportant des organes pousseurs des plateaux de maturation (8) depuis et vers l'unité de maturation des feuilles de pâte à mâcher (13).

6. Installation selon la revendication 5, caractérisée en ce que le bras manipulateur (26) est monté coulissant longitudinalement au portique (27) sur deux rails de guidage (28) au moyen de deux barres d'accouplement parallèles (29) transversales au portique (27) entre lesquelles le bras manipulateur (26) peut coulisser.

7. Installation selon l'une des revendications 5 ou 6, caractérisé en ce que la tête de préhension (30) du bras manipulateur (28) est déplaçable verticalement entre une position basse en complément ou en soustraction d'un ou de plusieurs plateau(x) de maturation (8) et une position haute de transfert de ce ou de ces plateau(x) (8) au moyen d'un vérin hydraulique ou pneumatique (31) et comprend un cadre porteur en forme de U inversé (32) prolongé par deux retours d'extrémité (33) dirigés vers l'intérieur de la surface du cadre (32) porteur (32).

8. Installation selon la revendication 7, caractérisé en ce que la hauteur des bras verticaux (37) du cadre porteur (32) est réglable.

9. Installation selon l'une des revendications 7 ou 8, caractérisé en ce que le cadre porteur (32) peut être ouvert temporairement à sa base, par écartement vers l'extérieur de la surface dudit cadre (32) de ses bras verticaux (37).

10. Installation selon l'une quelconque des revendications 5 à 9, caractérisé en ce que le moyen de transport (5) est constitué par une succession ininterrompue de chariots (6) attelés à la suite les uns des autres.
